# EUROPÄISCHE PATENTSCHRIFT

(11) **EP 3 053 781 B1**
(45) Veröffentlichungstag und Bekanntmachung des Hinweises auf die Patenterteilung: **29.03.2017**
(21) Anmeldenummer: 15305167.7
(22) Anmeldetag: 05.02.2015
(51) Int. Cl.: B60R 16/02

(54) **Durchführung einer Leitung durch eine Wandung**
Lead-through for a line through a wall
Traversée pour une conduite à travers une paroi

(43) Veröffentlichungstag der Anmeldung: 10.08.2016
(73) Patentinhaber: Nexans, 75008 Paris (FR)
(72) Erfinder: Lindner, Gerhard, 95703 PLÖSSBERG (DE); Teicher, Hermann, 92702 Kohlberg (DE); Reinwald, Martin, 92272 FREUDENBERG (DE)
(74) Vertreter: Godard, Evelin

(56) Entgegenhaltungen:
- JP-A- H11 341 651
- JP-A- 2001 176 346
- US-B1- 6 815 615
- US-B1- 7 641 271

## Beschreibung

Die Erfindung bezieht sich auf eine Anordnung zum feuchtigkeitsdichten Durchführen einer Leitung durch eine Wandung, welche eine die Leitung in Montageposition umschließende Durchführung aufweist, sowie auf ein entsprechendes Verfahren. Im Folgenden soll der Begriff Leitung sowohl Einzelleitungen als auch Leitungssätze umfassen.

Insbesondere in einem Kraftfahrzeug wird eine Vielzahl von verschiedenartigen Leitungen eingesetzt. Beispielsweise müssen elektrische Elemente oder Geräte mit elektrischem Strom versorgt werden. Zu den elektrischen Elementen zählen beispielsweise Leuchtdioden in Scheinwerfern und Rückleuchten, Motoren zum Heben und Senken der Fenster sowie zur Rückspiegelsteuerung, Beleuchtungen des Armaturenbretts, Sensoren und Steuergeräte. Andere Systeme, beispielweise die Scheibenwischanlage, müssen mit Flüssigkeit versorgt werden. Die elektrischen Elemente werden in bekannter Weise mittels elektrischer Leitungen, welche oft zu Kabelbäumen bzw. Kabelsätzen zusammengefaßt sind, mit einer in der Fahrzeugkarosserie angeordneten Zentraleinheit verbunden. Die Kabelsätze können auch Signalleitungen enthalten. Flüssigkeiten können mittels flexiblen oder starren Leitungen transportiert werden.

Die Leitungen müssen in einem Kraftfahrzeug oft in verschiedenen Bereichen verlegt werden und diese durchqueren. Beispielsweise verlaufen die Leitungen durch abgedichtete, trockene Bereiche und nicht abgedichtete, wasserdurchlässige Bereiche der Karosserie. Diese Bereiche sind durch Trennwände hermetisch voneinander getrennt, welche von den Leitungen durchlaufen werden müssen. Beispielsweise gibt es in einer Fahrzeugtür einen Bereich unterhalb der heb- und senkbaren Fensterscheibe, in welchen Feuchtigkeit eindringen kann, sowie einen Trockenbereich. Die Leitungen können auch durch eine Außenwand hindurchgeführt werden, beispielsweise bei Anhängerkupplungen oder zur Versorgung von außen am Fahrzeug angebrachten Beleuchtungsanlagen.

Die Trennwände zwischen solchen unterschiedlichen Bereichen, welche beispielsweise aus dem Blech der Fahrzeugkarosserie bestehen, bzw. die Außenwände müssen von den Leitungen durchquert werden, ohne daß die hermetische Trennung zwischen den unterschiedlichen Bereichen beeinträchtigt wird. Um eine solche abgedichtete Durchführung zu gewährleisten, werden beispielsweise einfache Gummitüllen oder mehrteilige Kunststoffdurchführungen verwendet, welche vor dem Einbau der Leitung bzw. noch vor dem Fertigstellen derselben auf die Leitung aufgebracht werden. Die Durchführung durch die Wandung bzw. Trennwand kann auch mit Dichtungsmaterial geschäumt werden.

Die EP 2 008 875 A1 beschreibt eine Durchführung für eine elektrische Leitung durch eine Wandung eines elektrischen Geräts, welche aus einem Adapter, einem Dichtungsring und einem Klemmkörper besteht. Der Adapter hat einen Stutzen, welcher durch das Wandungsloch hindurchragt, und einen Flansch, welcher an der Wandung durch Verschrauben, Verrasten oder durch einen Bajonettverschluß fixiert ist. Der Stutzen hat eine in das Innere des Geräts weisende Erweiterung, an welcher ein kammförmiges Bauteil (der Klemmkörper) einrastbar ist, welches die Leitungen innerhalb der Durchführung vereinzelt.

Der Erfindung liegt die Aufgabe zugrunde, eine feuchtigkeitsdichte Durchführung einer Leitung in einem Kraftfahrzeug anzugeben, welche einfach und nachträglich, d.h. nach dem Abschließen des Fertigungsprozesses der Leitung, montierbar ist.

Diese Aufgabe wird gemäß der Erfindung dadurch gelöst,
- daß die Durchführung ein etwa hülsenförmiges Gehäuse mit einer die Hülsenform an einer Stelle unterbrechenden Öffnung aufweist, das auf die fertige Leitung in radialer Richtung aufsetzbar ist,
- daß die Durchführung weiterhin ein Dichtelement aufweist, das aus einem ringförmigen Teil und aus einem in axialer Richtung von demselben abstehenden Steg besteht, welcher die Öffnung des Gehäuses in Montageposition dicht anliegend verschließt,
- daß der Steg einen in seiner Längsrichtung verlaufenden Schlitz aufweist, der an seinem einen Ende im Bereich des ringförmigen Teils nach außen offen ist und an seinem anderen Ende in einem Loch endet, in welchem die Leitung nach radialem Aufschieben des Dichtelements auf dieselbe in Montageposition dicht umschlossen liegt, und
- daß der ringförmige Teil des Dichtelements nach Montage des Gehäuses auf dessen äußerer Oberfläche festgelegt ist.

Die erfindungsgemäße Durchführung erlaubt das staub- und feuchtigkeitsdichte Durchführen einer beliebigen Leitung durch eine Wandung, beispielsweise eine Trennwand oder eine Außenwand einer Fahrzeugkarosserie. Die Durchführung besteht mit Vorteil aus nur zwei Teilen. Sie kann daher sehr einfach montiert werden. Außerdem ist sie mit Vorteil an einer fertigen Leitung bzw. einem fertigen Kabelbaum montierbar, beispielsweise nachdem die Leitung bereits im Fahrzeug installiert worden ist. Dies wird durch die offenen Formen des Gehäuses und des Dichtelements erreicht. Die Leitung muß deshalb nicht in ein Dichtelement oder eine Durchführung eingefädelt werden. Die Durchführung zeichnet sich durch das Vorhandensein des Gehäuses, zusätzlich zu dem Dichtelement, außerdem durch eine besonders hohe mechanische Belastbarkeit aus. Die Durchführung hat den weiteren Vorteil, daß sie beispielsweise für Reparaturzwecke nachträglich verbaut werden kann, ohne die Leitung oder den Leitungssatz ausbauen zu müssen.

Gemäß einer bevorzugten Ausführungsform ist das Loch des Stegs des Dichtelements um die Leitung herum mit einem Dichtmaterial ausgefüllt. Dies kann beispielsweise ein Industrieschaum sein. Dadurch wird die Feuchtigkeitsdichtigkeit der Anordnung weiter erhöht.

Die Leitung kann aus einem Kabelbaum bzw. Leitungssatz mit einer Vielzahl einzelner isolierter Leiter bestehen. Gemäß einer weiteren bevorzugten Ausführungsform weist die Durchführung weiterhin ein Einlegeteil auf, welches in dem Loch des Dichtelements angeordnet und geeignet ist, die einzelnen isolierten Leiter getrennt voneinander durch das Loch des Dichtelements zu führen. In diesem Falle besteht die Durchführung aus drei Teilen. Bei mehr als drei durchzuführenden Leitungen verhindert ein kammförmiges Einlegeteil insbesondere eine Nestbildung in der Durchführung bei dem Ausfüllen mit Dichtmaterial.

Ausführungsbeispiele des Erfindungsgegenstandes sind in den Zeichnungen dargestellt. Es zeigen:
Fig. 1 eine perspektivische Ansicht einer erfindungsgemäßen Durchführung nach einer ersten Ausführungsform,
Fig. 2 eine perspektivische Ansicht eines Gehäuses der Durchführung nach der ersten Ausführungsform,
Fig. 3 eine perspektivische Ansicht eines Dichtelements der Durchführung nach der ersten Ausführungsform,
Fig. 4 eine perspektivische Ansicht einer erfindungsgemäßen Durchführung mit einem hindurchgeführten Leitungssatz,
Fig. 5 eine Seitenansicht einer erfindungsgemäßen Durchführung nach einer zweiten Ausführungsform,
Fig. 6A einen Schnitt durch die Durchführung nach der ersten Ausführungsform,
Fig. 6B einen Schnitt durch die Durchführung nach der zweiten Ausführungsform, und
Fig. 7 eine perspektivische Ansicht eines Einlegeteils der erfindungsgemäßen Durchführung.

In den Zeichnungen beziehen sich gleiche Bezugszeichen auf gleiche technische Merkmale.

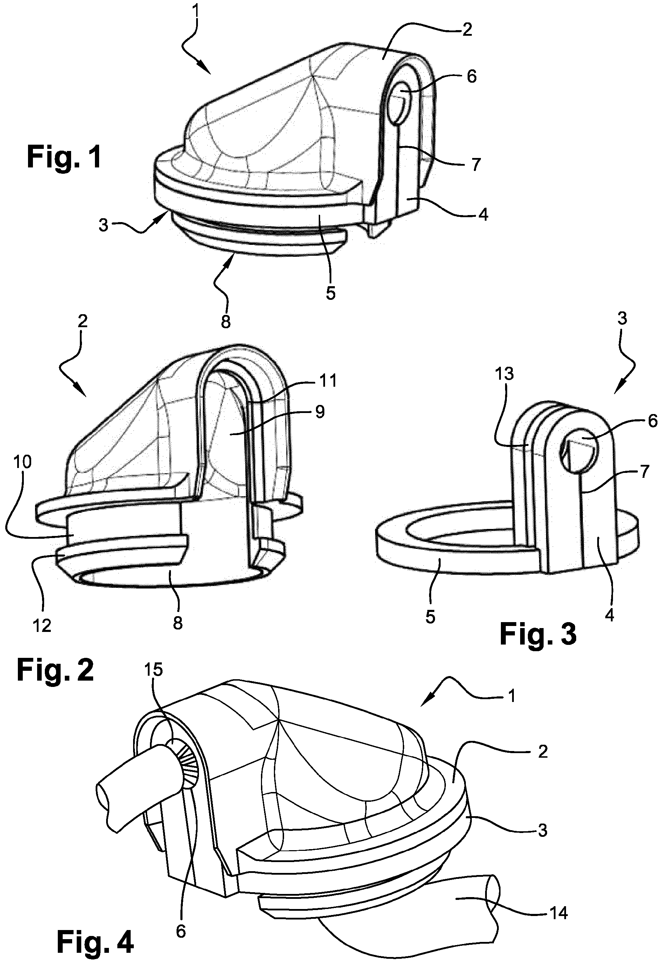

In Fig. 1 ist eine Durchführung 1 gemäß der Erfindung zur Durchführung einer Leitung durch eine Wandung nach einer ersten Ausführungsform gezeigt. Die Durchführung 1 besteht aus einem Gehäuse 2 und einem Dichtelement 3. Zur besseren Übersicht sind das Gehäuse 2 und das Dichtelement 3 jeweils einzeln in den Fig. 2 und 3 dargestellt.

Das Gehäuse 2 hat eine gebogene, etwa rohr- bzw. hülsenartige Form. Das Gehäuse 2 hat zwei zusammenhängende Öffnungen 8, 9, durch welche die Leitung, beispielsweise ein Kabelsatz, geführt wird. Der Teil des Gehäuses 2, in welchem sich die erste, kreisförmige Öffnung 8 befindet, ist dazu bestimmt, in einer Öffnung in einer Wandung angebracht zu werden. Diese Wandung (nicht dargestellt) kann beispielsweise eine Trennwand oder eine Außenwand in einer Fahrzeugkarosserie sein. Die zweite, die Hülsenform des Gehäuses 2 unterbrechende Öffnung 9 dient zur Aufnahme der Leitung in der Durchführung 1. Das Gehäuse 2 besteht vorzugsweise aus Kunststoff, beispielweise aus Polyam id, Polypropylen oder aus einem anderen gleichartigen Kunststoff.

Das Dichtelement 3 besteht in dem dargestellten Ausführungsbeispiel im Wesentlichen aus einem ringförmigen Teil bzw. Dichtungsring 5. Ein axial von dem Dichtungsring 5 abstehender Steg 4 hat ein Loch 6 bzw. einen Leitungsdurchgang und einen Schlitz 7. Der Schlitz 7 ist an seinem einen Ende im Bereich des ringförmigen Teils 5 nach außen offen und endet an seinem anderen Ende in dem Loch 6. Durch das Loch 6 wird die Leitung in Montageposition dicht umschlossen liegend in das Gehäuse 2 hineingeführt. Das Dichtelement 3 besteht aus einem elastischen Material, beispielsweise aus Silikon oder aus synthetischem Kautschuk wie EPDM. Der Schlitz 7 kann somit leicht geöffnet werden, solange das Dichtelement 3 nicht mit dem Gehäuse 2 montiert ist. Durch das Öffnen des Schlitzes 7 wird das Stegloch 6 mit der Öffnung des Dichtungsrings 5 zusammenhängend.

Dank der zusammenhängenden Öffnungen 8, 9 des Gehäuses 2 und des erweiterbaren Schlitzes 7 in dem Steg 4 des Dichtelements 3 ist es mit Vorteil möglich, die erfindungsgemäße Durchführung 1 nachträglich auf eine bereits installierte und/oder mit Steckern oder ähnlichem versehene Leitung aufzubringen. Es ist kein Einfädeln der Leitung in die Durchführung 1 notwendig.

In Montage- bzw. Arbeitsposition wird das Dichtelement 3 von dem Gehäuse 2 getragen. Das Gehäuse 2 selbst ist in Montageposition in der Wandungsöffnung angebracht. Der Dichtungsring 5 des Dichtelements 3 liegt dabei in einer um die erste Öffnung 8 des Gehäuses 2 verlaufenden Vertiefung 10 bzw. Nut außen an dem Gehäuse 2 an. Ebenfalls in der Vertiefung 10 verläuft der Öffnungsrand der Wandung, in welche die Durchführung 1 in Arbeitsposition eingesetzt ist. Dabei wird der Öffnungsrand der Wandung zwischen dem elastischen Dichtungsring 5 und einem Vorsprung 12, welcher von der Vertiefung 10 gebildet wird, eingeklemmt. Der Durchgang des Gehäuses 2 durch die Wandungsöffnung ist damit vollständig abgedichtet.

In dem dargestellten Ausführungsbeispiel weist die zweite Öffnung 9 des Gehäuses 2 einen Vorsprung 11 auf, welcher innerhalb des Umfangs der Öffnung 9 verläuft. Dieser Vorsprung 11 kooperiert in Arbeitsposition mit einer teilweise um den Steg 4 des Dichtelements 3 umlaufenden Nut 13. Dadurch wird auch diese Öffnung 9, bzw. der Durchgang der Leitung durch das Gehäuse 2, von dem Dichtelement 3 abgedichtet. Die zweite Gehäuseöffnung 9 umschließt den Steg 4 in Arbeitsposition. Das Dichtelement 3 erstreckt sich somit auch in das Innere des Gehäuses 2. In der Arbeitsposition wird der Schlitz 7 des Stegs 4 des Dichtelements 3 von dem Gehäuse 2 verschlossen.

Die Fig. 4 zeigt die erfindungsgemäße Durchführung 1 mit einer hindurchgeführten Leitung 14 zur Veranschaulichung der Anordnung in Arbeitsposition. Die Wandung ist nicht dargestellt. Die Leitung 14 ist im dargestellten Falle ein Kabel- bzw. Leitungssatz. Die einzelnen Kabel bzw. isolierten Leiter des Kabelsatzes 14 sind in Fig. 4 am Eintritt 15 des Kabelsatzes 14 in die Stegöffnung 6 des Dichtelements 3 sichtbar.

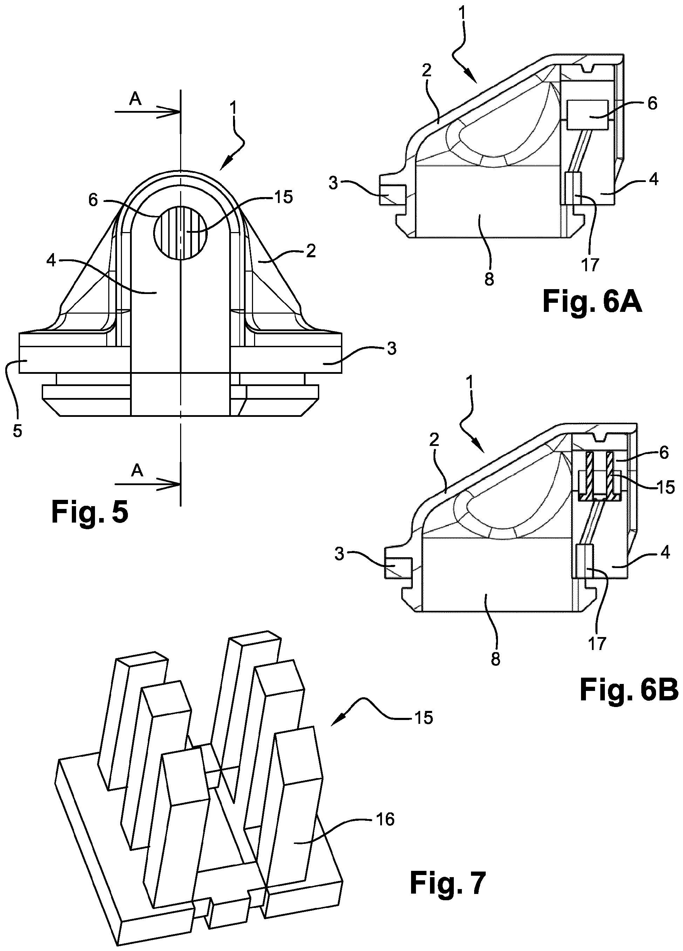

Die Fig. 5 zeigt eine Seitenansicht der erfindungsgemäßen Durchführung 1 nach einer zweiten Ausführungsform. Die zweite Ausführungsform unterscheidet sich von der ersten dadurch, daß der Steg 4 des Dichtelements 3 ein Einlegeteil 15 enthält. Das Einlegeteil 15 ist in Fig. 7 einzeln dargestellt. Es ist innerhalb der Stegöffnung 6 angeordnet. Das Einlegeteil 15 dient dazu, die einzelnen isolierten Leiter eines Kabelsatzes getrennt durch die Stegöffnung 6 zu führen. Dazu werden die einzelnen isolierten Leiter jeweils zwischen die Stifte 16 des kammartigen Einlegeteils 15 gelegt oder geklemmt. Durch die festgelegte, getrennte Anordnung der Leiter wird einer Nestbildung entgegengewirkt.

Die Fig. 6A und 6B zeigen jeweils Schnitte der erfindungsgemäßen Durchführung 1 entlang der in Fig. 5 dargestellten Schnittlinie A-A. Im Gegensatz zu der in Fig. 6A dargestellten Durchführung 1 enthält die in Fig. 6B dargestellte Durchführung 1 ein Einlegeteil 15.

Der Durchmesser des Leitungsdurchgangs bzw. des Lochs 6 im Steg 4 des Dichtelements 3 ist dem Durchmesser der durchzuführenden Leitung angepaßt. Nach einer besonders bevorzugten Ausführungsform wird das Innere des Stegs 4 mit einem Dichtmaterial ausgefüllt. Insbesondere die Stegöffnung 6 des Dichtelements 3 wird so vollständig mit Dichtmaterial ausgefüllt. Beispielsweise kann es sich bei dem Dichtmaterial um einen Industrieschaum handeln, der in den Steg 4 hineingespritzt wird. Dazu kann der Steg 4, wie in den Fig. 6A und 6B dargestellt, mit einer Einspritzöffnung 17 versehen sein. Durch die Einspritzöffnung 17 dringt der Dichtschaum bis in die Stegöffnung 6 vor und füllt alle Freiräume zwischen der Leitung und dem Öffnungsrand vollständig aus. Der Dichtschaum härtet dann direkt in dem Steg 4 aus, ohne daß zusätzliche technische Maßnahmen, beispielsweise thermische Prozesse, getroffen werden müssen.

Dieses Ausführungsbeispiel ist besonders vorteilhaft für die Durchführung eines Kabelsatzes. Die einzelnen isolierten Leiter werden beispielsweise mittels des Einlegeteils 15 getrennt durch das Loch 6 des Stegs 4 geführt. Durch diese gerichtete Anordnung der Leiter wird einer Nestbildung der Leiter entgegengewirkt, welche das vollständige Umschäumen der Leiter verhindern kann. Durch vorherige Montage des Einlegeteils 15 wird eine vollständige, saubere Umspritzung jedes einzelnen isolierten Leiters gewährleistet. Durch das Einspritzen des Dichtmaterials wird gleichzeitig der Schlitz 7 in dem Steg 4 zusätzlich dicht verschlossen.

Die Durchführung 1 nach der Erfindung wird beispielsweise wie folgt montiert: Zunächst wird das Dichtelement 3 radial auf die Leitung 14 aufgeschoben, sodaß die Leitung 14 längs durch den Schlitz 7 hindurchgleitet, bis dieselbe im Loch 6 des Stegs 4 des Dichtelements 3 liegt. Im Falle eines Leitungssatzes 14 werden zunächst die Einzelleitungen zwischen die Stifte 16 bzw. Kämme eines Einlegeteils 15 eingelegt, so daß die Leitungen getrennt und ohne sich zu kreuzen liegen, und dann wird das Dichtelement 3 radial auf das Einlegeteil 15 aufgeschoben, sodaß das Einlegeteil 15 längs durch den Schlitz 7 hindurchgleitet, bis dasselbe zusammen mit den eingelegten Leitungen im Loch 6 des Stegs 4 liegt. Anschließend wird das Gehäuse 2 ebenfalls in radialer Richtung auf die Leitung 14 aufgeschoben. Dabei wird der ringförmige Teil 5 des Dichtelements 3 auf das Gehäuse 2 aufgeschnappt, bis er in der umlaufenden Nut 10 des Gehäuses 2 fest anliegt. Gleichzeitig wird dabei der Steg 4 des Dichtelements 3 in die Öffnung 9 des Gehäuses 2 gedrückt, sodaß der Vorsprung 11 des Stegs 4 in die Nut 13 der Öffnung 9 einschnappt. Damit verschließt der Steg 4 in Montageposition die Öffnung 9 dicht anliegend. Das Loch 6 des Stegs 4 kann dann eventuell beispielsweise mit Industrieschaum ausgespritzt werden, wie oben erläutert. Anschließend wird die gesamte, montierte Durchführung 1 in dem Wandungsloch fixiert, sodaß der Rand des Lochs innerhalb der Vertiefung 10 des Gehäuses 2 liegt.

## Patentansprüche

1. Anordnung zum feuchtigkeitsdichten Durchführen einer Leitung (14) durch eine Wandung, welche eine die Leitung (14) in Montageposition umschließende Durchführung (1) aufweist, **dadurch gekennzeichnet,**
- **daß** die Durchführung (1) ein etwa hülsenförmiges Gehäuse (2) mit einer die Hülsenform an einer Stelle unterbrechenden Öffnung (9) aufweist, das auf die fertige Leitung (14) in radialer Richtung aufsetzbar ist,
- **daß** die Durchführung (1) weiterhin ein Dichtelement (3) aufweist, das aus einem ringförmigen Teil (5) und aus einem in axialer Richtung von demselben abstehenden Steg (4) besteht, welcher die Öffnung (9) des Gehäuses (2) in Montageposition dicht anliegend verschließt,
- **daß** der Steg (4) einen in seiner Längsrichtung verlaufenden Schlitz (7) aufweist, der an seinem einen Ende im Bereich des ringförmigen Teils (5) nach außen offen ist und an seinem anderen Ende in einem Loch (6) endet, in welchem die Leitung (14) nach radialem Aufschieben des Dichtelements (3) auf dieselbe in Montageposition dicht umschlossen liegt, und
- **daß** der ringförmige Teil (5) des Dichtelements (3) nach Montage des Gehäuses (2) auf dessen äußerer Oberfläche festgelegt ist.

2. Anordnung nach Anspruch 1, **dadurch gekennzeichnet, daß** das Loch (6) des Stegs (4) des Dichtelements (3) um die Leitung (14) herum mit einem Dichtmaterial ausgefüllt ist.

3. Anordnung nach Anspruch 2, **dadurch gekennzeichnet, daß** das Dichtmaterial ein Industrieschaum ist.

4. Anordnung nach einem der vorangehenden Ansprüche, **dadurch gekennzeichnet, daß** die Leitung (14) aus einem Kabelbaum mit einer Vielzahl einzelner isolierter Leiter besteht, und daß die Durchführung (1) weiterhin ein Einlegeteil (15) aufweist, welches in dem Loch (6) des Dichtelements (3) angeordnet und geeignet ist, die einzelnen isolierten Leiter getrennt voneinander durch das Loch (6) des Dichtelements (3) zu führen.

5. Anordnung nach einem der vorangehenden Ansprüche, **dadurch gekennzeichnet, daß** das Dichtelement (3) aus einem elastischen Material besteht.

6. Anordnung nach einem der vorangehenden Ansprüche, **dadurch gekennzeichnet, daß** das Gehäuse (2) aus Polyamid oder Polypropylen besteht.

7. Verfahren zum feuchtigkeitsdichten Durchführen einer Leitung (14) durch eine Wandung, welche eine die Leitung (14) in Montageposition umschließende Durchführung (1) aufweist, **dadurch gekennzeichnet,**
- **daß** ein Dichtelement (3) der Durchführung (1), welches aus einem ringförmigen Teil (5) und aus einem in axialer Richtung von demselben abstehenden Steg (4) besteht, radial durch einen in der Längsrichtung des Stegs (4) verlaufenden Schlitz (7) auf die Leitung (14) aufgeschoben wird, bis die Leitung (14) in einem Loch (6) des Stegs (4) dicht umschlossen liegt,
- **daß** anschließend ein etwa hülsenförmiges Gehäuse (2) der Durchführung (1) mit einer die Hülsenform an einer Stelle unterbrechenden Öffnung (9) radial auf die Leitung (14) aufgesetzt wird, sodaß der ringförmige Teil (5) des Dichtelements (3) auf der äußeren Oberfläche des Gehäuses (2) festgelegt ist und der Steg (4) des Dichtelements (3) die Öffnung (9) des Gehäuses (2) dicht anliegend verschließt, und
- **daß** die so montierte Durchführung (1) in eine Wandungsöffnung gedrückt wird.

8. Verfahren nach Anspruch 7, **dadurch gekennzeichnet, daß** das Loch (6) des Stegs (4) um die Leitung (14) herum mit einem Dichtmaterial ausgefüllt wird.

## Claims

1. An arrangement for the moisture-tight feeding of a line (14) through a wall, which has a feedthrough (1) enclosing the line (14) in the installation position, **characterized in**
- **that** the feedthrough (1) has an approximately sleeve-shaped housing (2) with an opening (9) interrupting the sleeve shape at one location, which can be put on the completed line (14) in the radial direction,
- **that** the feedthrough (1) also has a sealing element (3), which consists of an annular part (5) and of a web (4) protruding in the axial direction from the same, which in a tight-fitting manner closes the opening (9) of the housing (2) in the installation position,
- **that** the web (4) has a slot (7) running in the longitudinal direction, which is open outwards on its one end in the area of the annular part (5) and ends on its other end in a hole (6), in which the line lies tightly-enclosed after radial sliding of the sealing element (3) onto the same in the installation position, and
- **that** the annular part (6) of the sealing element (3) is fixed after installation of the housing (2) on its outer the surface.

2. An arrangement according to Claim 1, **characterized in that** the hole (6) of the web (4) of the sealing element (3) is filled around the line (14) with a sealing material.

3. An arrangement according to Claim 2, **characterized in that** the sealing material is an industrial foam.

4. An arrangement according to one of the preceding claims, **characterized in that** the line (14) consists of a cable harness with a plurality of individually insulated conductors, and that the feedthrough (1) also has an insert (15), which is arranged in the hole (6) of the sealing element (3) and is suited for feeding the individually insulated conductors separately from one another through the hole (6) of the sealing element (3).

5. An arrangement according to one of the preceding claims, **characterized in that** the sealing element (3) consists of an elastic material.

6. An arrangement according to one of the preceding claims, **characterized in that** the housing (2) consists of polyamide or polypropylene.

7. A method for the moisture-tight feeding of a line (14) through a wall, which has a feedthrough (1) enclosing the line (14) in the installation position, **characterized in**
- **that** a sealing element (3) of the feedthrough (1) which consists of an annular part (5) and of a web (4) protruding in the axial direction from the same, is slid radially through a slot (7) running in the longitudinal direction of the web (4) onto the line (14), until the line (14) lies tightly-enclosed in a hole (6) of the web (4),
- **that** subsequently an approximately sleeve-shaped housing (2) of the feedthrough (1) having an opening (9) interrupting the sleeve shape at one location is radially put on the line (14), so that the annular part (5) of the sealing element (3) is fixed on the outer surface of the housing (2) and the web (4) of the sealing element (3) closes the opening (9) of the housing (2) in a tightly-fitting manner, and
- **that** the thus installed feedthrough (1) is pressed into the wall opening.

8. A method according to Claim 7, **characterized in that** the hole (6) of the web (4) is filled around the line (14) with a sealing material.

## Revendications

1. Agencement pour la traversée étanche à l'humidité d'une ligne (14) à travers une paroi qui présente un passage (1) entourant la ligne (14) dans la position de montage, **caractérisé en ce que**
- le passage (1) présente un boîtier (2) à peu près en forme de manchon, avec un orifice (9) interrompant la forme de manchon en un endroit, qui peut être posé sur la ligne (14) finie dans la direction radiale,
- le passage (1) présente en outre un élément d'étanchéité (3) qui se compose d'une partie (5) de forme annulaire et d'une nervure (4) qui s'éloigne de cette partie dans la direction axiale et qui ferme l'orifice (9) du boîtier (2) dans la position de montage en y étant adjacente de façon étanche,
- la nervure (4) présente une fente (7) qui s'étend dans sa direction longitudinale et qui est ouverte vers l'extérieur à une de ses extrémités dans la zone de la partie (5) de forme annulaire, et qui se termine à son autre extrémité dans un trou (6) dans lequel la ligne (14), après la poussée radiale de l'élément d'étanchéité (3) sur elle, est entourée de façon étanche dans la position de montage, et
- la partie (5) de forme annulaire de l'élément d'étanchéité (3) est, après le montage du boîtier (2), immobilisée sur la surface extérieure de celui-ci.

2. Agencement selon la revendication 1, **caractérisé en ce que** le trou (6) de la nervure (4) de l'élément d'étanchéité (3) est rempli d'un matériau d'étanchéité tout autour de la ligne (14).

3. Agencement selon la revendication 2, **caractérisé en ce que** le matériau d'étanchéité est une mousse industrielle.

4. Agencement selon l'une des revendications précédentes, **caractérisé en ce que** la ligne (14) se compose d'un faisceau de câbles avec une multiplicité de conducteurs isolés individuels, et **en ce que** le passage (1) présente en outre une partie d'insertion (15) qui est disposée dans le trou (6) de l'élément d'étanchéité (3) et qui est appropriée pour guider les conducteurs isolés individuels séparément les uns des autres à travers le trou (6) de l'élément d'étanchéité (3).

5. Agencement selon l'une des revendications précédentes, **caractérisé en ce que** l'élément d'étanchéité (3) se compose d'un matériau élastique.

6. Agencement selon l'une des revendications précédentes, **caractérisé en ce que** le boîtier (2) se compose de polyamide ou de polypropylène.

7. Procédé pour la traversée étanche à l'humidité d'une ligne (14) à travers une paroi qui présente un passage (1) entourant la ligne (14) dans la position de montage, **caractérisé en ce que**
- un élément d'étanchéité (3) du passage (1), qui se compose d'une partie (5) de forme annulaire et d'une nervure (4) qui s'éloigne de cette partie dans la direction axiale, est poussé sur la ligne (14) radialement à travers une fente (7) s'étendant dans la direction longitudinale de la nervure (4) jusqu'à ce que la ligne (14) soit entourée de façon étanche dans un trou (6) de la nervure (4),
- ensuite un boîtier (2) du passage (1) à peu près en forme de manchon, avec un orifice (9) interrompant la forme de manchon en un endroit, est posé radialement sur la ligne (14) de telle sorte que la partie (5) de forme annulaire de l'élément d'étanchéité (3) est immobilisée sur la surface extérieure du boîtier (2), et la nervure (4) de l'élément d'étanchéité (3) ferme l'orifice (9) du boîtier (2) en y étant adjacente de façon étanche, et
- le passage (1) ainsi monté est pressé dans un orifice de paroi.

8. Procédé selon la revendication 7, **caractérisé en ce que** le trou (6) de la nervure (4) est rempli d'un matériau d'étanchéité tout autour de la ligne (14).
